# EUROPÄISCHE PATENTSCHRIFT

(11) **EP 3 110 587 B1**
(45) Veröffentlichungstag und Bekanntmachung des Hinweises auf die Patenterteilung: **05.06.2019**
(21) Anmeldenummer: 15706680.4
(22) Anmeldetag: 24.02.2015
(51) Int. Cl.: B23K 3/02

(54) **LÖTSPITZENBEFESTIGUNGSSYSTEM**
SOLDERING TIP FASTENING SYSTEM
SYSTÈME DE FIXATION DESTINÉ À UNE PANNE

(30) Priorität: 28.02.2014 DE 202014001956 U
(43) Veröffentlichungstag der Anmeldung: 04.01.2017
(73) Patentinhaber: Apex Brands, Inc., Apex, NC 27539 (US)
(72) Erfinder: ZERWECK, Ralf, 74357 Bönnigheim (DE); NIEDERMAYER, Bernd, 74376 Gemmrigheim (DE)
(74) Vertreter: Grünecker Patent- und Rechtsanwälte PartG mbB
(86) Internationale Anmeldenummer: PCT/EP2015/000424
(87) Internationale Veröffentlichungsnummer: WO 2015/128080

(56) Entgegenhaltungen:
- US-A- 1 667 618
- US-A- 1 904 051
- US-A- 5 059 769

## Beschreibung

Die Erfindung bezieht sich im Allgemeinen auf die Befestigung von Lötspitzen an Lötvorrichtungen. Genauer bezieht sich die Erfindung auf eine Lötspitzenbefestigungshülse gemäß dem Oberbegriff des Anspruchs 1, auf eine Lötspitze gemäß dem Oberbegriff des Anspruchs 5, auf ein Lötspitzenbefestigungssystem, das aus solchen Komponenten besteht sowie auf eine Lötvorrichtung, die eine oder mehrere der genannten Komponenten umfasst. Der Oberbegriff der Ansprüche 1 und 5 basiert dabei auf der DE 1 565 515.

Lötvorrichtungen sind aus der Praxis bekannt. Sie umfassen in der Regel ein Heizelement, das an einem Griff oder ähnlichen Einrichtungen der Lötvorrichtung befestigt ist. Um eine Lötspitze an dem Heizelement beziehungsweise an anderen Einrichtungen der Lötvorrichtung zu befestigen, kommen häufig Befestigungshülsen zum Einsatz. Diese sind oft derart ausgelegt, dass die zu befestigende Lötspitze durch sie hindurchgeschoben werden muss, um die Befestigungshülse danach über das Heizelement zu ziehen und an diesem oder der übrigen Lötvorrichtung zu befestigen. Solche konventionellen Systeme weisen den Nachteil auf, dass gebogene Lötspitzen oder aber Lötspitzen mit einem Durchmesser, der größer als der Innendurchmesser der Befestigungshülse ist, nicht mit solchen Systemen verwendet werden können.

Die WO 91/02618 A1 offenbart eine Lösung für angewinkelte Lötspitzen. Die dort offenbarte Lötspitze weist einen Befestigungsabschnitt auf, in den eine angewinkelte Nut eingebracht ist. Zusammen mit einer entsprechenden Hülse wird dadurch ein Bajonettverschluss gebildet. Eine solche Lötspitze kann mit dem Befestigungsabschnitt zuerst in die Befestigungshülse eingeführt und an dieser befestigt werden. Ein gegebenenfalls angewinkelter Lötabschnitt der Lötspitze muss damit nicht durch die Hülse geführt werden, was eine größere Freiheit bei dessen Gestaltung ermöglicht.

Nachteilig an dieser Lösung ist vor allem, dass die Befestigungsnut an der Lötspitze einen hohen Fertigungsaufwand verursacht, da mindestens eine Nut, im Regelfall eher zwei Nuten, eingefräst werden müssen. Erschwerend kommt hinzu, dass mindestens ein Abschnitt pro Nut bei zylindrischen Befestigungsabschnitten in Umfangsrichtung eines solchen zylindrischen Befestigungsabschnitts gefräst werden muss, was eine aufwendige Werkzeug- oder aber Werkstückführung erfordert. Dieser fertigungstechnische Nachteil fällt besonders ins Gewicht vor dem Hintergrund, dass es sich bei Lötspitzen um ein Verschleißteil handelt, das häufig ausgetauscht und somit in entsprechenden Stückzahlen hergestellt werden muss.

Aufgabe der Erfindung ist es, Lötspitzen beliebiger Form und Außenabmessungen mit Hilfe von Befestigungshülsen an Lötvorrichtungen zu befestigen, und dabei eine möglichst einfache und kostengünstige Fertigung der Lötspitze zu gewährleisten.

Diese Aufgabe wird erfindungsgemäß gelöst durch eine Lötspitzenbefestigungshülse mit den Merkmalen des Anspruchs 1 sowie durch eine Lötspitze mit den Merkmalen des Anspruchs 13.

Vorteilhafte Weiterbildungen der Erfindung sind in den Unteransprüchen angegeben.

Die erfindungsgemäße Lötspitzenbefestigungshülse nach Anspruch 1 umfasst einen Lötvorrichtungsbefestigungsabschnitt, der ein Innenmaß und ein Außenmaß aufweist, und einen Lötspitzenbefestigungsabschnitt, der ebenfalls ein Innenmaß und ein Außenmaß sowie eine Bundhalterung aufweist, wobei der Lötspitzenbefestigungsabschnitt und der Lötvorrichtungsbefestigungsabschnitt unterschiedlichen Enden der Lötspitzenbefestigungshülse zugeordnet sind. Die erfindungsgemäße Lötspitzungsbefestigungshülse zeichnet sich dadurch aus, dass die Bundhalterung an einem ersten Teilsektor eines Umfangs der Lötspitzenbefestigungshülse vorgesehen ist. Dadurch wird ein Einsetzen einer entsprechenden Lötspitze ermöglicht, sodass eine solche Lötspitze nicht mehr durch die Lötspitzenbefestigungshülse geführt werden muss. Dadurch kann die Lötspitze unabhängig von Dimension und Form der Lötspitzenbefestigungshülse gestaltet werden. Darüber hinaus ermöglicht die erfindungsgemäße Ausführung der Lötspitzenbefestigungshülse eine einfachere Fertigung der Lötspitze, wie im weiteren Verlauf noch deutlich werden wird.

Bei der Bundhalterung kann es sich um eine beliebige Struktur an der Lötspitzenbefestigungshülse handeln, die dazu geeignet ist, die Bewegungsfreiheit eines entsprechenden Bundes einer entsprechenden Lötspitze in zumindest einem Freiheitsgrad einzuschränken. Es kann sich beispielsweise um eine konstruktive Verringerung des Innenmaßes der Lötspitzenbefestigungshülse handeln. Denkbar ist beispielsweise eine Lötspitzenbefestigungshülse aus einem dünnwandigen Rohr, bei dem der Rand eines ersten Teilsektors zu einer Mittelachse des Rohrs hin umgebördelt ist. Es ist jedoch ebenfalls denkbar, dass die Lötspitzenbefestigungshülse aus Vollmaterial gefertigt wird und der das Innenmaß definierende Hohlraum durch eine Bohrung eingebracht wird, die nicht bis zum vorderen Ende der Lötspitzenbefestigungshülse reicht, wodurch ein Absatz entsteht, der als Bundhalterung dienen kann.

Die Lötspitzenbefestigungshülse kann eine beliebige Form haben. Es sind insbesondere rohrförmige Querschnitte möglich. Dabei sind runde Rohrquerschnitte ebenso denkbar wie eckige rohrförmige Querschnitte. Als Innenmaß ist dabei ein Abstand in einer Querschnittsebene, die senkrecht zur Mittelachse des Rohrs verläuft, zwischen gegenüberliegenden Innenwänden desselben zu verstehen. Bei einem kreisrunden rohrförmigen Querschnitt entspricht das Innenmaß beispielsweise dem Innendurchmesser. Entsprechendes gilt für das Außenmaß. Wie bereits erwähnt, ist es vorteilhaft, wenn die Bundhalterung das Innenmaß des Lötspitzenbefestigungsabschnitts begrenzt. Auf diese Weise kann eine Bundhalterung auf besonders einfache Weise realisiert werden.

Es ist denkbar, dass das Innenmaß des Lötspitzenbefestigungsabschnitts kleiner ist als das Innenmaß des Lötvorrichtungsbefestigungsabschnitts.

Weiterhin ist es vorteilhaft, wenn der erste Teilsektor einen Mittelpunktswinkel aufweist, der 180° oder kleiner ist. Der Mittelpunktswinkel ist dabei als Winkel zwischen zwei geraden Linien zu verstehen, die in einer Ebene senkrecht zu einer Mittelachse der Lötspitzenbefestigungshülse verlaufen, sich in dem Schnittpunkt zwischen der Mittelachse und der jeweiligen Querschnittsebene treffen und den ersten Teilsektor begrenzen, d. h., dass die Bundhalterung zwischen diesen beiden Linien verläuft. Ein derart bemessener Mittelpunktswinkel erleichtert, wie später noch deutlicher wird, das Einschieben einer entsprechenden Lötspitze in die erfindungsgemäße Lötspitzenbefestigungshülse. Ein Mittelpunktswinkel von mehr als 180° und weniger als 360° ist jedoch auch vorstellbar.

Vorteilhafterweise umfasst die Lötspitzenbefestigungshülse einen zweiten Teilsektor, an dem keine Bundhalterung vorgesehen ist. Es können in weiteren Varianten sowohl mehrere erste Teilsektoren als auch mehrere zweite Teilsektoren vorgesehen sein, sodass die Bundhalterung aus mehreren zahnähnlichen Vorsprüngen besteht.

Es ist ebenso denkbar, dass an dem zweiten Teilsektor ein Vorsprung vorgesehen ist. Dies ist insbesondere bei einer Bundhalterung vorteilhaft, die an nur einem ersten Teilsektor vorgesehen ist. Ein Vorsprung ist aber ebenso denkbar, wenn mehrere erste Teilsektoren vorgesehen sind. Wie später klar werden wird, kann ein solcher Vorsprung die Befestigungswirkung und -sicherheit der Verbindung zwischen Lötspitze und Lötspitzenbefestigungshülse verbessern. Bei dem Vorsprung kann es sich um einen nach innen gebogenen Abschnitt der Lötspitzenbefestigungshülse handeln. Es ist jedoch auch beispielsweise eine aufgeklebte oder aufgeschweißte Struktur denkbar. Darüber hinaus kann der Vorsprung durch eine entsprechende Verformung der Hülse vorgesehen werden, beispielsweise eine Einbuchtung oder eine Delle.

Es ist zweckmäßig, wenn der Rand des zweiten Teilsektors in axialer Richtung der Lötspitzenbefestigungshülse von einem Rand der Bundhalterung beabstandet ist. Dies kann wiederum das Einsetzen einer Lötspitze in die Lötspitzenbefestigungshülse vereinfachen.

Besonders günstig ist es, wenn die Lötspitzenbefestigungshülse an einem Übergang zwischen dem ersten und dem zweiten Teilsektor einen Ausschnitt aufweist. Auch dadurch kann das Einsetzen einer geeigneten Lötspitze in die Lötspitzenbefestigungshülse erleichtert werden. Besonders wenn der bereits erwähnte Abstand in axialer Richtung zwischen dem Rand des zweiten Teilsektors und dem Rand der Bundhalterung sehr klein ist beziehungsweise gar kein Abstand besteht, ist ein solcher Ausschnitt vorteilhaft.

Es ist denkbar, dass die Bundhalterung eine Bördelung umfasst. Eine solche Bördelung kann durch einfaches Umformen eines rohrförmigen Halbzeugs hergestellt werden. Sie stellt folglich eine kostengünstige Variante der Bundhalterung dar.

Es ist vorstellbar, dass der Lötvorrichtungsbefestigungsabschnitt eine Mutter aufweist, die für eine Verschraubung mit einer Lötvorrichtung ausgelegt ist. Bei einer solchen Mutter handelt es sich um ein bewährtes Befestigungsmittel zwischen Lötspitzenbefestigungshülse und Lötvorrichtung. Dadurch ist eine einfache, intuitive und sichere Befestigung gewährleistet.

Die Mutter kann vorteilhafterweise unlösbar mit der Lötspitzenbefestigungshülse verbunden oder aber einstückig mit dieser ausgeführt sein. Dadurch verringert sich die Teilezahl beim Zusammenbau der Lötvorrichtung.

Als weitere vorteilhafte Variante ist es denkbar, dass die Mutter eine Überwurfmutter ist. Solche Überwurfmuttern sind gegebenenfalls als Standardteile erhältlich, was die Kosten reduziert. Auch die Fertigung der Lötspitzenbefestigungshülse könnte dadurch unter Umständen vereinfacht werden.

Die Erfindung bezieht sich auch auf eine Lötspitze, die einen Lötabschnitt und einen Befestigungsabschnitt umfasst, wobei die Lötspitze durch den Befestigungsabschnitt an einer Lötvorrichtung fixierbar ist, wobei ein maximales Außenmaß des Befestigungsabschnitts gleich oder kleiner ist als ein maximales Außenmaß des Lötabschnitts, oder der Lötabschnitt angewinkelt ist. Die erfindungsgemäße Lötspitze zeichnet sich dadurch aus, dass der Befestigungsabschnitt einen Bund umfasst. Ein solcher Bund ist beispielsweise bei runden Querschnitten mit Hilfe von Drehverfahren einfach und somit kostengünstig herzustellen. Gerade weil Lötspitzen in aller Regel Verscheißteile sind, wirken sich diese Kostenvorteile bei der Herstellung besonders gravierend aus. Bisher konnten Lötspitzen, bei denen ein Befestigungsabschnitt ein maximales Außenmaß aufweist, das gleich oder kleiner ist als ein maximales Außenmaß eines Lötabschnitts, oder aber Lötspitzen mit angewinkelten Lötabschnitten nur mit deutlich aufwendigeren Befestigungsstrukturen, wie dem in der oben erwähnten WO 91/02618 A1 offenbarten Bajonettverschluss, befestigt werden.

Es ist denkbar, dass der Bund eine Aussparung aufweist. Diese kann zur Verbesserung der Befestigungswirkung oder aber zur Vereinfachung der Handhabung dienen. Entsprechende Strukturen an einer zugehörigen Lötspitzenbefestigungshülse, oder aber an der entsprechenden Lötvorrichtung, können in einer solchen Aussparung aufgenommen werden. Dies kann dazu dienen, die Lötspitze relativ zur Lötspitzenbefestigungshülse oder zur gesamten Lötvorrichtung in einer vordefinierten Orientierung auszurichten. Es ist ebenso denkbar, dass die Aussparung ein zusätzliches Arretierungselement, wie zum Beispiel den Vorsprung aus der vorbeschriebenen Lötspitzenbefestigungshülse, aufnimmt. Die Aussparung kann zum Beispiel als Lücke in dem Bund vorgesehen sein. Sie kann sich außerdem bis in die eigentliche Lötspitze hineinerstrecken oder sich nur zum Teil in radialer Richtung in den Bund hinein erstrecken.

Es ist vorstellbar, dass der Bund an mindestens einem dritten Teilsektor vorgesehen ist. Der dritte Teilsektor ist an der Lötspitze vorgesehen und analog zu dem ersten und dem zweiten Teilsektor an der Lötspitzenbefestigungshülse definiert. Die Begrenzung des Bundes auf diesen dritten Teilsektor kann dazu dienen, die Aussparung vorzusehen. Dabei kann es vorteilhaft sein, wenn der dritte Teilsektor einen Mittelpunktswinkel von mindestens 330° aufweist. In diesem Fall könnte die Aussparung an einem vierten Teilsektor vorgesehen sein, der einen Mittelpunktswinkel von 30° oder weniger aufweist. Es ist jedoch ebenso denkbar, dass sich zwischen den beiden Enden des dritten Teilsektors mehrere Aussparungen beziehungsweise entsprechend ein Bundabschnitt oder mehrere Bundabschnitte befinden.

Unabhängig von der Größe des dritten Teilsektors kann es vorteilhaft sein, wenn mehrere dritte Teilsektoren vorgesehen sind. Diese können beispielsweise gleichmäßig über den Umfang der Lötspitze verteilt sein, sodass zwischen benachbarten Teilsektoren jeweils eine Aussparung vorgesehen ist. Es sind jedoch genauso gut mehrere dritte Teilsektoren denkbar, die jeweils unterschiedliche Mittelpunktswinkel aufweisen.

Die Erfindung bezieht sich auch auf ein Lötspitzenbefestigungssystem, das eine vorstehend beschriebene Lötspitzenbefestigungshülse sowie eine vorstehend beschriebene Lötspitze umfasst.

Vorteilhafterweise ist die Lötspitze durch eine Schwenkbewegung und/oder translatorisch in einer Richtung in die Hülse einsetzbar, wobei die Richtung in einem Winkel zu einer Mittelachse der Hülse verläuft. Auf diese Weise kann der Bund der Lötspitze an der Bundhalterung der Lötspitzenbefestigungshülse vorbeigeführt und in die Lötspitzenbefestigungshülse eingesetzt werden. Die Lötspitze muss folglich nicht durch die Lötspitzenbefestigungshülse geführt werden, wodurch der Lötabschnitt unabhängig von der Größe der Lötspitzenbefestigungshülse gestaltet werden kann. Gleichzeitig ist eine wirtschaftliche Herstellung der Lötspitze dadurch möglich, dass lediglich ein einfach zu fertigender Bund vorgesehen wird.

In einem Lötspitzenbefestigungssystem, das eine erfindungsgemäße Lötspitzenbefestigungshülse mit einem zweiten Teilsektor aufweist, an dem keine Bundhalterung vorgesehen ist, wobei ein Rand des zweiten Teilsektors in axialer Richtung der Lötspitzenbefestigungshülse von einem Rand der Bundhalterung beabstandet ist, und das weiterhin eine erfindungsgemäße Lötspitze aufweist, ist es vorteilhaft, wenn der erwähnte axiale Abstand an der Lötspitzenbefestigungshülse kleiner ist als eine axiale Dicke des Bundes an der Lötspitze. Auf diese Weise kann nach dem Einsetzen der Lötspitze ein axialer Form- und/oder Kraftschluss zwischen dem Bund und der Bundhalterung und ein radialer Form- und/oder Kraftschluss zwischen dem Rand des zweiten Teilsektors und dem Bund hergestellt werden. Dadurch kann eine sichere Verbindung zwischen Lötspitze und Lötspitzenbefestigungshülse gewährleistet werden.

Wenn das Lötspitzenbefestigungssystem eine Lötspitzenbefestigungshülse mit einem an dem zweiten Teilsektor vorgesehenen Vorsprung umfasst und es weiterhin eine Lötspitze mit der weiter oben beschriebenen Aussparung beinhaltet, ist es denkbar, dass der Vorsprung durch die Aussparung in dem Bund aufnehmbar ist. Dies kann die Ausrichtung der Lötspitze in einer vordefinierten Position ermöglichen. Denkbar ist ebenfalls, dass der Vorsprung beim Einsetzen der Lötspitze vollständig durch die Aussparung hindurchgeführt wird und die Lötspitze anschließend gedreht wird, sodass durch den Eingriff zwischen Vorsprung und Bund eine weitere Arretierung möglich ist.

Bei dem erfindungsgemäßen Lötspitzenbefestigungssystem ist es vorteilhafterweise möglich, dass ein maximales Außenmaß des Lötabschnitts der Lötspitze größer ist als ein minimales Innenmaß der Lötspitzenbefestigungshülse. So können die Lötspitze und die Lötspitzenbefestigungshülse unabhängig voneinander gestaltet werden.

In einer weiteren Variante ist es ebenfalls vorteilhafterweise möglich, dass ein maximales Außenmaß des Lötabschnitts der Lötspitze größer ist als ein maximales Außenmaß der Lötspitzenbefestigungshülse.

In einer weiteren Variante ist es ebenfalls vorteilhafterweise möglich, dass ein maximales Außenmaß des Lötabschnitts der Lötspitze größer ist als das Innenmaß des Lötspitzenbefestigungsabschnitts.

Die Erfindung bezieht sich auch auf eine Lötvorrichtung, die eine Lötspitzenbefestigungshülse der vorstehend beschriebenen Art und/oder eine Lötspitze der vorstehend beschriebenen Art und/oder ein Lötspitzenbefestigungssystem der vorstehend beschriebenen Art umfasst.

Die Erfindung bezieht sich auf eine Lötspitzenbefestigungshülse, eine Lötspitze, ein Lötspitzenbefestigungssystem sowie auf eine Lötvorrichtung der vorstehend beschriebenen Art.

Im Folgenden wird ein vorteilhaftes Ausführungsbeispiel der Erfindung anhand von Zeichnungen näher erläutert.
- Figuren 1a bis 1c: zeigen eine perspektivische Ansicht eines erfindungsgemäßen Lötspitzenbefestigungssystems, das eine erfindungsgemäße Lötspitze und eine erfindungsgemäße Lötspitzenbefestigungshülse umfasst, gemäß einem ersten Ausführungsbeispiel.
- Figur 2: zeigt eine Seitenansicht einer erfindungsgemäßen Lötspitzenbefestigungshülse gemäß dem ersten Ausführungsbeispiel.
- Figur 3: zeigt eine geschnittene Seitenansicht der Lötspitzenbefestigungshülse aus Figur 2, wobei nur ein der Lötspitze zugewandter Abschnitt dargestellt ist.
- Figur 4: zeigt die geschnittene Seitenansicht aus Figur 3, wobei zusätzlich eine erfindungsgemäße Lötspitze und ein Heizelement dargestellt sind.
- Figur 5: zeigt eine frontale Ansicht der Lötspitzenbefestigungshülse nach dem ersten Ausführungsbeispiel mit axialer Blickrichtung auf den Lötspitzenbefestigungsabschnitt.
- Figur 6: zeigt eine rückseitige Ansicht einer erfindungsgemäßen Lötspitze gemäß einem zweiten Ausführungsbeispiel mit axialer Blickrichtung auf einen Befestigungsabschnitt der Lötspitze.
- Figuren 7a bis 7d: zeigen verschiedene Gestaltungsmöglichkeiten des Lötabschnitts der Lötspitze, die sowohl bei einer Lötspitze gemäß dem ersten Ausführungsbeispiel als auch bei einer Lötspitze gemäß dem zweiten Ausführungsbeispiel vorgesehen werden können.
- Figuren 8a und 8b: zeigen perspektivische Ansichten eines erfindungsgemäßen Lötspitzenbefestigungssystems gemäß einem zweiten Ausführungsbeispiel.
- Figur 9: zeigt beispielhaft ein Lötspitzenbefestigungssystem nach dem zweiten Ausführungsbeispiel in einer geschnitten Seitenansicht, wodurch eine Konfiguration eines Heizelements einer Lötvorrichtung sichtbar wird.
- Figur 10: zeigt ein erfindungsgemäßes Lötspitzenbefestigungssystem gemäß dem ersten Ausführungsbeispiel in einer geschnittenen Seitenansicht, in der eine alternative Konfiguration eines Heizelements einer Lötvorrichtung zu erkennen ist.
- Figur 11: zeigt schematisch eine erfindungsgemäße Lötvorrichtung und eine erfindungsgemäße Lötspitze, die durch eine erfindungsgemäße Lötspitzenbefestigungshülse an der Lötvorrichtung befestigt ist.

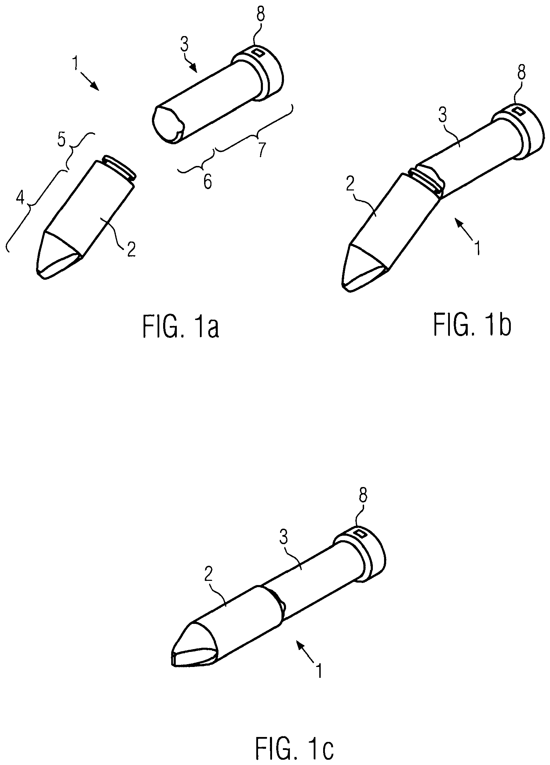

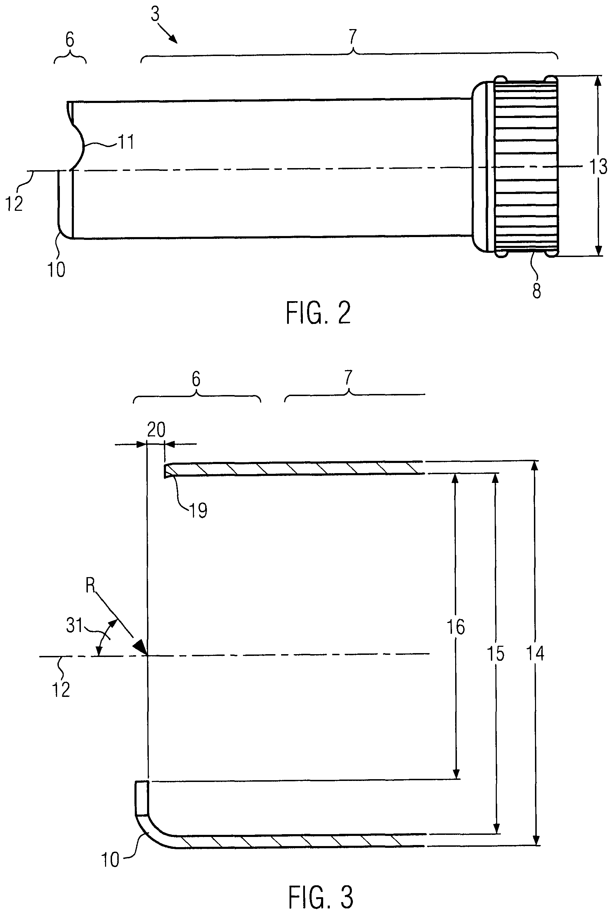

In Figuren 1a bis 1c ist ein Lötspitzenbefestigungssystem 1 dargestellt. Es sind verschiedene Stufen eines Einsetzvorgangs gezeigt, in dem eine Lötspitze 2 in eine Lötspitzenbefestigungshülse 3 eingesetzt wird. Die Lötspitze 2 wird in einer Schwenkbewegung und/oder translatorisch in einer Einsetzrichtung R (siehe Figur 3) in die Lötspitzenbefestigungshülse eingesetzt. Die Richtung R verläuft in einem Winkel 31 zu einer Mittelachse 12, die weiter unten näher erläutert wird. Die Lötspitze 2 umfasst einen Lötabschnitt 4 mit einem maximalen Außenmaß 4a und einen Befestigungsabschnitt 5 mit einem maximalen Außenmaß 5a. Die Lötspitzenbefestigungshülse umfasst einen Lötspitzenbefestigungsabschnitt 6 und einen Lötvorrichtungsbefestigungsabschnitt 7. Gut zu erkennen ist, dass der Lötvorrichtungsbefestigungsabschnitt 7 der Lötspitzenbefestigungshülse 3 im dargestellten Ausführungsbeispiel eine Mutter 8 umfasst. Im vorliegenden Ausführungsbeispiel ist die Mutter 8 als eine Überwurfmutter ausgeführt. Sie kann jedoch ebenso fest mit den übrigen Abschnitten der Lötspitzenbefestigungshülse 3 verbunden oder aber einstückig mit diesen ausgeführt sein.

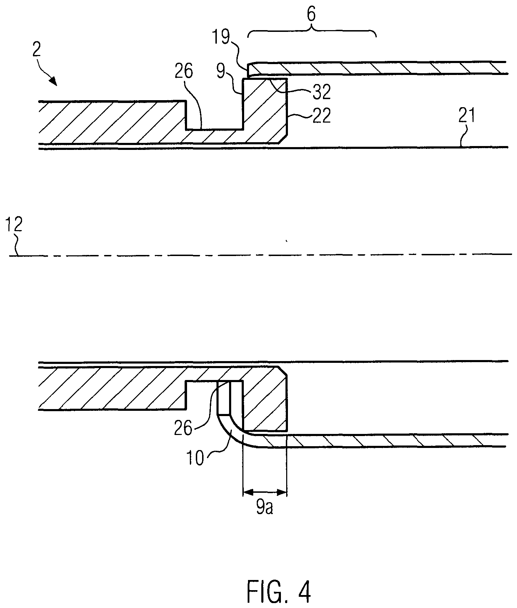

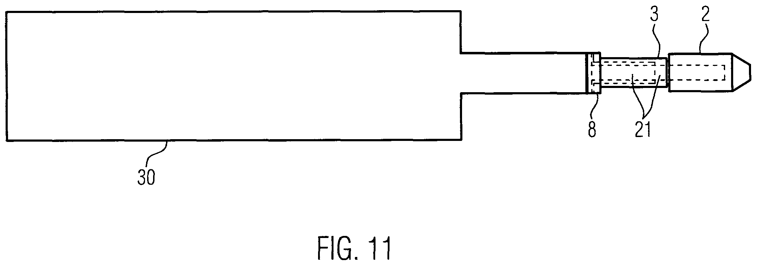

Der Befestigungsabschnitt 5 der Lötspitze 2 weist einen Bund 9 mit einer axialen Dicke 9a (siehe Figur 4a) auf. Zur Befestigung der Lötspitze 2 an einer später anhand von Figur 11 noch näher beschriebenen Lötvorrichtung 30 werden der Befestigungsabschnitt 5 und der Lötspitzenbefestigungsabschnitt 6 in Eingriff miteinander gebracht. Dazu wird der Bund 9 in eine Bundhalterung 10 (siehe Figur 2) eingesetzt, die später noch näher beschrieben wird. Wie aus den Figuren 1a bis 1c klar wird, muss die Lötspitze 2 nicht durch die Lötspitzenbefestigungshülse 3 geführt werden, sodass der Lötabschnitt 4 unabhängig von den Maßen der Lötspitzenbefestigungshülse 3 gestaltet werden kann.

Figur 2 zeigt die Lötspitzenbefestigungshülse 3 in einer detaillierteren Seitenansicht. Hier ist deutlich die Bundhalterung 10 zu erkennen. Außerdem ist hier ein kreisbogenförmiger Ausschnitt 11 zu erkennen, der optional das Einsetzen des Bundes 9 in die Lötspitzenbefestigungshülse 3 erleichtern kann. Es ist jedoch ebenso denkbar, dass kein solcher Ausschnitt 11 vorgesehen ist. Ebenfalls zu erkennen ist die Mittelachse 12 der Lötspitzenbefestigungshülse 3. Im vorliegenden Ausführungsbeispiel, in dem die Lötspitzenbefestigungshülse 3 einen rohrförmigen, kreisrunden Querschnitt aufweist, ist diese Mittelachse durch die zylindrische Mantelfläche der Lötspitzenbefestigungshülse 3 definiert. Im beschriebenen Ausführungsbeispiel weist die Lötspitzenbefestigungshülse ein maximales Außenmaß 13 auf. In diesem Fall wird dies durch den Außendurchmesser der Mutter 8 definiert. Bei alternativen Ausgestaltungen der Lötspitzenbefestigungshülse kann jedoch auch eine beliebige andere Struktur das maximale Außenmaß 13 der Lötspitzenbefestigungshülse 3 definieren.

In Figur 3 ist eine geschnittene Seitenansicht eines in Figur 2 links liegenden Abschnitts der Lötspitzenbefestigungshülse 3 zu sehen. Es ist zu erkennen, dass es sich bei der Bundhalterung 10 im vorliegenden Ausführungsbeispiel um eine Bördelung handelt. Es kann jedoch eine beliebige, zur Befestigung eines Bundes geeignete Struktur vorgesehen sein, die auf eine beliebige Art und Weise gefertigt wird. Zusätzlich ist ein Außenmaß 14 des Lötspitzenbefestigungsabschnitts zu sehen. Ebenso ist ein Innenmaß 15 des Lötvorrichtungsbefestigungsabschnitts sowie ein Innenmaß 16 des Lötspitzenbefestigungsabschnitts zu erkennen.

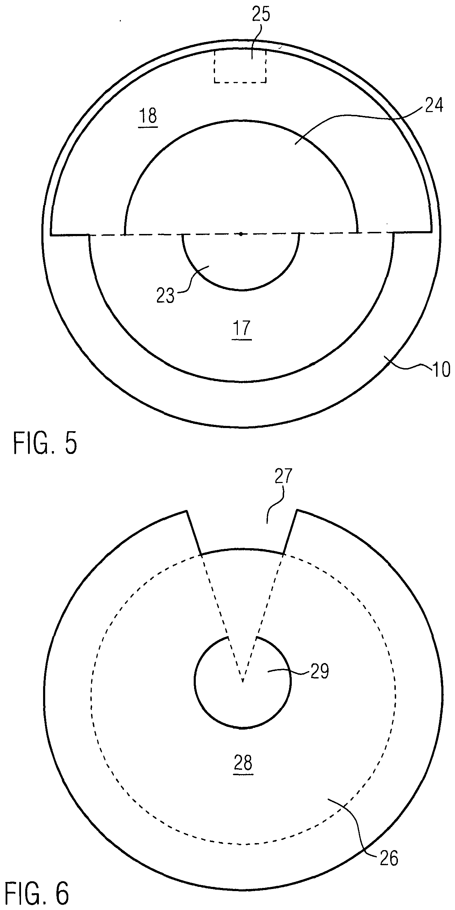

Im vorliegenden Ausführungsbeispiel ist die Bundhalterung 10 an einem ersten Teilsektor 17 (siehe Figur 5) vorgesehen. An einem zweiten Teilsektor 18 der Lötspitzenbefestigungshülse ist keine Bundhalterung 10 vorgesehen. Zwischen einem Rand 19 des zweiten Teilsektors 18 und der Bundhalterung 10 ist ein axialer Abstand 20 vorgesehen. Dieser wird in Richtung der Mittelachse 12 der Lötspitzenbefestigungshülse 3 gemessen.

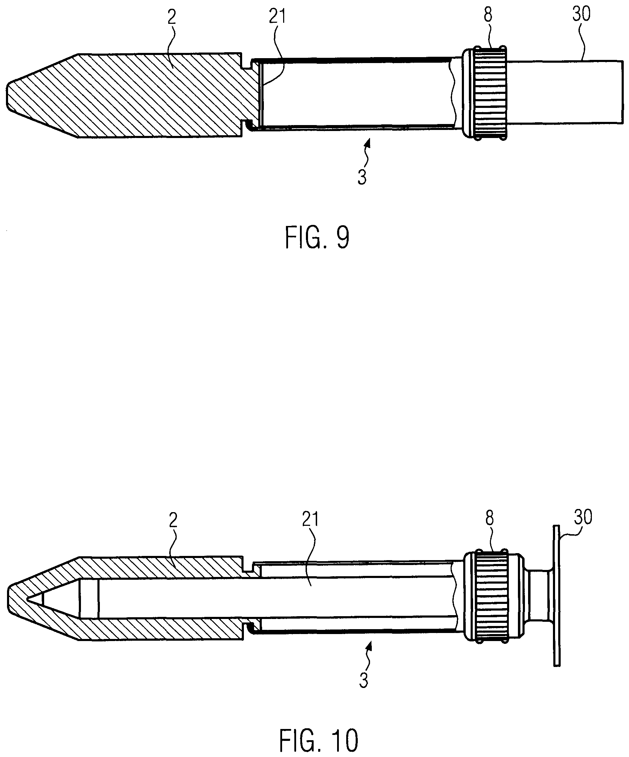

In Figur 4 ist die Ansicht aus Figur 3 zu sehen, wobei zusätzlich eine Lötspitze 2 in den Lötspitzenbefestigungsabschnitt 6 eingesetzt ist. Hier ist auch zu sehen, dass zwischen dem Lötabschnitt 4 und dem Befestigungsabschnitt 5 ein Stamm 26 vorgesehen ist. Dieser weist ein Außenmaß auf, das kleiner ist als das Außenmaß des Bundes 9. Es ist zusätzlich zu erkennen, dass es sich bei der Lötspitze 2 um eine Hohlspitze handelt, in die ein Heizelement 21 einer Lötvorrichtung 30 eingeführt werden kann. Wie später noch erläutert werden wird, ist es jedoch ebenso denkbar, dass die Lötspitze 2 aus Vollmaterial besteht und ein entsprechendes Heizelement 21 vorgesehen ist, das nur bis zu einer Grundfläche 22 der Lötspitze reicht. In Figur 4 ist deutlich zu erkennen, dass durch den Eingriff zwischen der Bundhalterung 10 und dem Bund 9 ein axialer Form- und/oder Kraftschluss entsteht. Durch den Eingriff zwischen einer Mantelfläche 32 des Bundes 9 und dem Rand 19 der Lötspitzenbefestigungshülse 3 entsteht ein Form- und/oder Kraftschluss in radialer Richtung. Zusammen mit dem in die Lötspitze 2 eingeführten Heizelement 21 oder aber dem an der Grundfläche 22 anliegenden Heizelement 21 (siehe hierzu auch Figur 9) ist die Lötspitze 2 dadurch sicher an einer Lötvorrichtung befestigt.

In Figur 5 ist die Lötspitzenbefestigungshülse frontal mit Blick auf den Lötspitzenbefestigungsabschnitt 6 zu sehen. Es ist deutlich zu erkennen, dass die Bundhalterung 10 an einem ersten Teilsektor 17 der Lötspitzenbefestigungshülse vorgesehen ist, der einen ersten Mittelpunktswinkel 23 aufweist. Im vorliegenden Ausführungsbeispiel beträgt dieser erste Mittelpunktswinkel 23 180°. Er kann jedoch auch jeden beliebigen anderen Wert annehmen, bevorzugt jedoch zwischen 0° und 180°. Ebenfalls zu erkennen ist der zweite Teilsektor 18, an dem keine Bundhalterung vorgesehen ist, und der einen zweiten Mittelpunktswinkel 24 aufweist. An den Übergängen zwischen dem ersten und dem zweiten Teilsektor 17, 18 kann, wie in Figuren 1 und 2 am besten zu erkennen ist, jeweils ein Ausschnitt 11 vorgesehen sein, der das Einführen des Bundes in den Lötspitzenbefestigungsabschnitt 6 vereinfacht. Am Rand 19 des zweiten Teilsektors 18 kann gemäß einem zweiten Ausführungsbeispiel ein Vorsprung 25 vorgesehen sein. Dieser kann zu einer zusätzlichen Sicherung der Lötspitze 2 dienen.

Figur 6 zeigt eine Ansicht der Lötspitze 2 nach dem zweiten Ausführungsbeispiel mit Blickrichtung auf die Grundfläche 22. Der Stamm 26 der Lötspitze ist nicht sichtbar und durch einen in unterbrochenen Linien dargestellten Kreis angedeutet. Im Bund 9 der Lötspitze 2 ist eine Aussparung 27 vorgesehen. Diese kann den Vorsprung 25 an der Lötspitzenbefestigungshülse 3 aufnehmen. Der Vorsprung 25 und die Aussparung 27 können dabei derart ausgeführt sein, dass der Eingriff zwischen ihnen die Lötspitze 2 in einer vordefinierten Orientierung relativ zur Lötspitzenbefestigungshülse 3 fixiert. Ebenso ist es denkbar, dass der Bund 9 vollständig an dem Vorsprung 25 vorbeigeführt wird und danach die Lötspitze 3 um die Mittelachse 12 gedreht wird. Dadurch kann ein zusätzlicher Verriegelungseffekt vorgesehen werden.

In Figur 6 reicht die Aussparung 27 bis zur Mantelfläche des Stamms 26. Es ist jedoch ebenso denkbar, dass die Aussparung weniger tief reicht, d. h., dass im Bereich der Aussparung noch ein Stück des Bundes 9 über den Querschnitt des Stamms 26 hinausreicht. Es ist jedoch auch denkbar, dass die Aussparung bis in den Stamm 26 hineinreicht.

Die Aussparung 27 kann auch dadurch vorgesehen werden, dass der Bund 9 an einem dritten Teilsektor 28 der Lötspitze 2 vorgesehen ist. Wenn nur eine Aussparung 27 vorgesehen ist, weist der dritte Teilsektor 28 einen dritten Mittelpunktswinkel 29 von 330° oder mehr auf. Es ist jedoch auch denkbar, dass mehrere dritte Teilsektoren 28 und dementsprechend auch mehrere Aussparungen 27 vorgesehen sind. Auf diese Weise kann es beispielsweise erleichtert werden, die Lötspitze 2 in den Lötspitzenbefestigungsabschnitt 6 einzusetzen, da die Lötspitze 2 weniger weit um die Mittelachse 12 gedreht werden muss, um eine der Aussparungen 27 in Übereinstimmung mit dem Vorsprung 25 zu bringen.

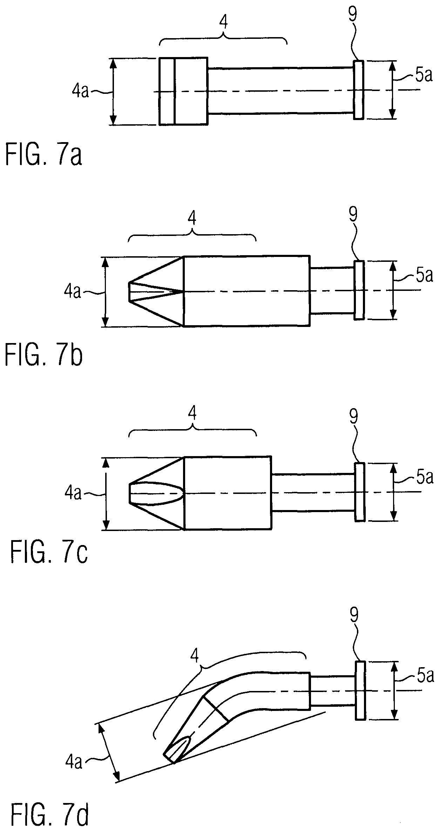

In den Figuren 7a bis 7d sind verschiedene denkbare Varianten der Gestaltung des Lötabschnitts 4 der Lötspitze 2 dargestellt. Diese Gestaltungen haben im Wesentlichen gemeinsam, dass sie eine Durchführung der Lötspitze 2 durch die Lötspitzenbefestigungshülse 3 verhindern, wenn diese durch den Bund 9 an der Lötvorrichtung befestigt werden sollen.

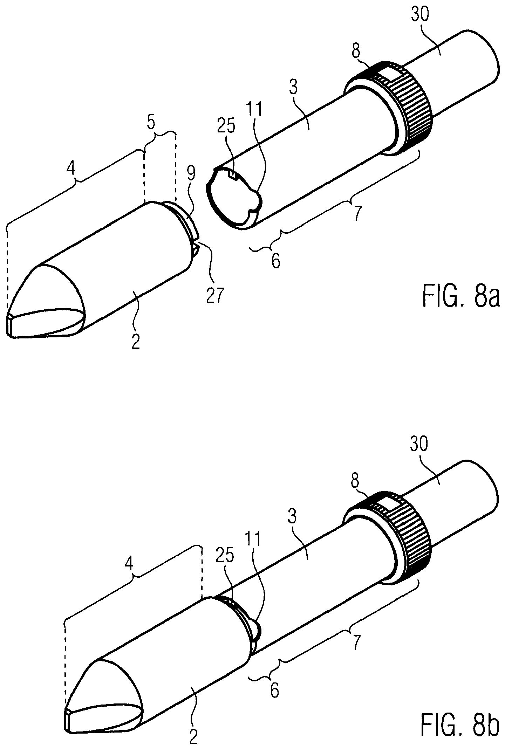

In den Figuren 8a und 8b ist ein zweites Ausführungsbeispiel, in dem die Lötspitzenbefestigungshülse 3 einen Vorsprung 25 und der Bund 9 der Lötspitze 2 eine Aussparung 27 aufweist, dargestellt.

Figur 9 zeigt das zweite Ausführungsbeispiel in einer Variante mit einer aus Vollmaterial hergestellten Lötspitze 2 und einem entsprechenden, flachen Heizelement 21.

Figur 10 zeigt beispielhaft eine als Hohlspitze ausgeführte Lötspitze 2, in die ein Heizelement 21 hineinreicht, in Kombination mit dem ersten Ausführungsbeispiel des Lötspitzenbefestigungssystems 1. Es ist jedoch ebenso möglich, das erste Ausführungsbeispiel des Lötspitzenbefestigungssystems 1 mit einer Lötspitze 2 aus Vollmaterial zu kombinieren, oder aber eine als Hohlspitze ausgeführte Lötspitze 2 mit einem Lötspitzenbefestigungssystem nach dem zweiten Ausführungsbeispiel.

In Figur 11 ist eine erfindungsgemäße Lötvorrichtung 30 schematisch dargestellt. Bei der Lötvorrichtung 30 kann es sich wie im dargestellten Ausführungsbeispiel um einen Lötkolben handeln. Es sind jedoch auch beliebige andere Lötvorrichtungen, wie zum Beispiel Lötstationen denkbar. Durch die unterbrochenen Linien sind zwei mögliche Konfigurationen des Heizelements 21 angedeutet, da dieses normalerweise durch die Lötspitzenbefestigungshülse und die Lötspitze 2 verdeckt ist. Die Lötspitzenbefestigungshülse 3 sichert die Lötspitze 2 an der Lötvorrichtung 30. Da Figur 11 lediglich der Erläuterung der Anordnung der Komponenten relativ zueinander dient, sind die vorstehend beschriebenen Befestigungsstrukturen an der Lötspitzenbefestigungshülse 3 und der Lötspitze 2 der Einfachheit halber nicht im Detail dargestellt.

## Patentansprüche

1. Lötspitzenbefestigungshülse (3), umfassend:
einen Lötvorrichtungsbefestigungsabschnitt (7), der ein Innenmaß (15) und ein Außenmaß aufweist, und
einen Lötspitzenbefestigungsabschnitt (6), der ebenfalls ein Innenmaß (16) und ein Außenmaß (14) sowie eine Bundhalterung (10) aufweist, die an einem ersten Teilsektor (17) eines Umfangs der Lötspitzenbefestigungshülse (3) vorgesehen ist,
wobei der Lötspitzenbefestigungsabschnitt (6) und der Lötvorrichtungsbefestigungsabschnitt (7) unterschiedlichen Enden der Lötspitzenbefestigungshülse (3) zugeordnet sind, und
wobei die Lötspitzenbefestigungshülse (3) einen zweiten Teilsektor (18) umfasst, an dem keine Bundhalterung (10) vorgesehen ist,
**dadurch gekennzeichnet, dass** die Lötspitzenbefestigungshülse (3) an einem Übergang zwischen dem ersten und dem zweiten Teilsektor (17, 18) einen Ausschnitt (11) aufweist.

2. Lötspitzenbefestigungshülse nach Anspruch 1, **dadurch gekennzeichnet, dass** die Bundhalterung (10) das Innenmaß (16) des Lötspitzenbefestigungsabschnitts (6) begrenzt.

3. Lötspitzenbefestigungshülse nach einem der vorangehenden Ansprüche, **dadurch gekennzeichnet, dass** an dem zweiten Teilsektor (18) ein Vorsprung (25) vorgesehen ist.

4. Lötspitzenbefestigungshülse nach einem der vorangehenden Ansprüche, **dadurch gekennzeichnet, dass** der Rand (19) des zweiten Teilsektors (18) in axialer Richtung der Lötspitzenbefestigungshülse (3) von einem Rand der Bundhalterung (10) beabstandet ist.

5. Lötspitze (2), umfassend:
einen Lötabschnitt (4) und einen Befestigungsabschnitt (5), durch den die Lötspitze (2) an einer Lötvorrichtung (30) fixierbar ist und der einen Bund (9) umfasst, wobei ein maximales Außenmaß (5a) des Befestigungsabschnitts (5) kleiner ist als ein maximales Außenmaß (4a) des Lötabschnitts (4),
**dadurch gekennzeichnet, dass** der Bund (9) an einem dritten Teilsektor (28) vorgesehen ist, der einen Mittelpunktswinkel (29) von mindestens 330° aufweist, wodurch an einem vierten Teilsektor eine Aussparung (27) vorgesehen ist.

6. Lötspitzenbefestigungssystem (1), umfassend:
eine Lötspitzenbefestigungshülse (3) nach einem der Ansprüche 1-4 und
eine Lötspitze (2) nach Anspruch 5.

7. Lötspitzenbefestigungssystem nach Anspruch 6,
wobei die Lötspitze (2) durch eine Schwenkbewegung und/oder translatorisch in einer Richtung (R) in die Hülse einsetzbar ist, wobei die Richtung (R) in einem Winkel (31) zu einer Mittelachse (12) der Hülse verläuft.

8. Lötspitzenbefestigungssystem (1), umfassend:
eine Lötspitzenbefestigungshülse (3) nach Anspruch 4 und
eine Lötspitze (2) nach Anspruch 5,
**dadurch gekennzeichnet, dass** der axiale Abstand (20) zwischen dem Rand (19) des zweiten Teilsektors (18) und dem Rand der Bundhalterung (10) kleiner ist als eine axiale Dicke (9a) des Bundes (9).

9. Lötspitzenbefestigungssystem (1), umfassend:
eine Lötspitzenbefestigungshülse (3) nach einem der Ansprüche 3-4 und
eine Lötspitze (2) nach Anspruch 5,
**dadurch gekennzeichnet, dass** der Vorsprung (25) durch die Aussparung (27) in dem Bund (9) aufnehmbar ist.

10. Lötspitzenbefestigungssystem nach einem der Ansprüche 6-9, **dadurch gekennzeichnet, dass** ein maximales Außenmaß (4a) des Lötabschnitts (4) der Lötspitze (2) größer ist als ein minimales Innenmaß der Lötspitzenbefestigungshülse (3) und/oder als ein maximales Außenmaß (13) der Lötspitzenbefestigungshülse (3) und/oder als das Innenmaß (16) des Lötspitzenbefestigungsabschnitts (6).

11. Lötvorrichtung (30), die eine Lötspitzenbefestigungshülse (3) nach einem der Ansprüche 1-4 oder eine Lötspitze (2) nach Anspruch 5 oder ein Lötspitzenbefestigungssystem (1) nach einem der Ansprüche 6-10 umfasst.

## Claims

1. A soldering tip fastening sleeve (3) comprising:
a soldering device fastening portion (7) having an internal measurement (15) and an external measurement; and
a soldering tip fastening portion (6) which also has an internal measurement (16) and an external measurement (14) as well as a collar holder (10) provided on a first subsector (17) of a circumference of the soldering tip fastening sleeve (3),
wherein the soldering tip fastening portion (6) and the soldering device fastening portion (7) are associated with different ends of the soldering tip fastening sleeve (3), and
wherein the soldering tip fastening sleeve (3) includes a second subsector (18), which does not have provided thereon any collar holder,
**characterized in that** the soldering tip fastening sleeve (3) is provided with a recess (11) at a transition between the first and second subsectors (17, 18).

2. The soldering tip fastening sleeve according to claim 1, **characterized in that** the collar holder (10) delimits the internal measurement (16) of the soldering tip fastening portion (6).

3. The soldering tip fastening sleeve according to one of the preceding claims, **characterized in that** the second subsector (18) has provided thereon a projection (25).

4. The soldering tip fastening sleeve according to one of the preceding claims, **characterized in that** the edge (19) of the second subsector (18) is spaced apart from an edge of the collar holder (10) in an axial direction of the soldering tip fastening sleeve (3).

5. A soldering tip (2) comprising:
a soldering portion (4) and a fastening portion (5) through which the soldering tip (2) is adapted to be fixed to a soldering device (30) and which comprises a collar (9), wherein a maximum external measurement (5a) of the fastening portion (5) is smaller than a maximum external measurement (4a) of the soldering portion (4), **characterized in that** the collar (9) is provided on a third subsector (28) having a central angle (29) of at least 330° whereby a recess (27) is provided on a fourth subsector.

6. A soldering tip fastening system (1) comprising:
a soldering tip fastening sleeve (3) according to one of the claims 1-4 and a soldering tip (2) according to claim 5.

7. The soldering tip fastening system according to claim 6, wherein the soldering tip (2) is adapted to be inserted into the sleeve by a pivotal movement and/or translationally in a direction (R), said direction (R) extending at an angle (31) relative to a center axis (12) of the sleeve.

8. A soldering tip fastening system (1) comprising:
a soldering tip fastening sleeve (3) according to claim 4 and a soldering tip (2) according claim 5,
**characterized in that** the axial distance (20) between the edge (19) of the second subsector (18) and the edge of the collar holder (10) is smaller than an axial thickness (9a) of the collar (9).

9. A soldering tip fastening system (1) comprising:
a soldering tip fastening sleeve (3) according to one of the claims 3 to 4 and a soldering tip (2) according to claim 5,
**characterized in that** the projection (25) is adapted to be accommodated in the recess (27) of the collar (9).

10. The soldering tip fastening system according to one of the claims 6 to 9, **characterized in that** a maximum external measurement (4a) of the soldering portion (4) of the soldering tip (2) is larger than a minimum internal measurement of the soldering tip fastening sleeve (3) and/or than a maximum external measurement (13) of the soldering tip fastening sleeve (3) and/or than the internal measurement (16) of the soldering tip fastening portion (6).

11. A soldering device (30) comprising a soldering tip fastening sleeve (3) according to one of the claims 1-4 or a soldering tip (2) according to claim 5 or a soldering tip fastening system (1) according to one of the claims 6 to 10.

## Revendications

1. Douille de fixation de panne à braser (3) appelée communément panne à souder, comprenant un tronçon de fixation au dispositif à braser (7), qui présente une dimension intérieure (15) et une dimension extérieure, et
un tronçon de fixation de panne à braser (6), qui présente également une dimension intérieure (16) et une dimension extérieure (14), ainsi qu'un système de maintien à collerette (10), qui est prévu sur un premier secteur partiel (17) d'une périphérie de la douille de fixation de panne à braser (3),
douille de fixation dans laquelle le tronçon de fixation de panne de à braser (6) et le tronçon de fixation au dispositif à braser (7) sont associés à des extrémités différentes de la douille de fixation de panne à braser (3), et
dans laquelle la douille de fixation de panne à braser (3) comporte un deuxième secteur partiel (18) sur lequel n'est pas prévu de système de maintien à collerette (10),
**caractérisé en ce que** la douille de fixation de panne à braser (3) présente une encoche (11), au niveau d'une transition entre le premier et le deuxième secteur partiel (17, 18).

2. Douille de fixation de panne à braser selon la revendication 1, **caractérisé en ce que** le système de maintien à collerette (10) délimite la dimension intérieure (16) du tronçon de fixation de panne à braser (6) .

3. Douille de fixation de panne à braser selon l'une des revendications précédentes, **caractérisé en ce que** sur le deuxième secteur partiel (18), il est prévu une protubérance (25).

4. Douille de fixation de panne à braser selon l'une des revendications précédentes, **caractérisé en ce que** le bord (19) du deuxième secteur partiel (18) est espacé, dans la direction axiale de la douille de fixation de panne à braser (3), d'un bord du système de maintien à collerette (10).

5. Panne à braser (2) communément appelée panne à souder, comprenant :
un tronçon à braser (4) et un tronçon de fixation (5) par l'intermédiaire duquel la panne à braser (2) peut être fixée à un dispositif à braser (30) appelé communément dispositif à souder, et qui comporte une collerette (9), une dimension extérieure maximale (5a) du tronçon de fixation (5) étant inférieure à une dimension extérieure maximale (4a) du tronçon à braser (4),
**caractérisée en ce que** la collerette (9) est prévue sur un troisième secteur partiel (28), qui présente un angle au centre (29) d'au moins 330°, ce qui fait qu'il est prévu un évidement (27) sur un quatrième secteur partiel.

6. Système de fixation de panne à braser (1), comprenant :
une douille de fixation de panne à braser (3) selon l'une des revendications 1 - 4, et
une panne à braser (2) selon la revendication 5.

7. Système de fixation de panne à braser selon la revendication 6,
dans lequel la panne à braser (2) peut être insérée dans la douille par un mouvement de pivotement et/ou par translation dans une direction (R), la direction (R) s'étendant sous un angle (31) par rapport à un axe central (12) de la douille.

8. Système de fixation de panne à braser (1), comprenant :
une douille de fixation de panne à braser (3) selon la revendication 4, et
une panne à braser (2) selon la revendication 5,
**caractérisé en ce que** la distance d'espacement axiale (20) entre le bord (19) du deuxième secteur partiel (18) et le bord du système de maintien à collerette (10), est inférieure à une épaisseur axiale (9a) de la collerette (9) .

9. Système de fixation de panne à braser (1), comprenant :
une douille de fixation de panne à braser (3) selon l'une des revendications 3-4, et
une panne à braser (2) selon la revendication 5,
**caractérisé en ce que** la protubérance (25) peut être accueillie à travers l'évidement (27) dans la collerette (9) .

10. Système de fixation de panne à braser selon l'une des revendications 6-9, **caractérisé en ce qu'**une dimension extérieure maximale (4a) du tronçon à braser (4) de la panne à braser (2) est supérieure à une dimension intérieure minimale de la douille de fixation de panne à braser (3), et/ou à une dimension extérieure maximale (13) de la douille de fixation de panne à braser (3), et/ou à la dimension intérieure (16) du tronçon de fixation de panne à braser (6).

11. Dispositif à braser (30) appelé communément dispositif à souder, qui comprend une douille de fixation de panne à braser (3) selon l'une des revendications 1-4, ou bien une panne à braser (2) selon la revendication 5, ou bien un système de fixation de panne à braser (1) selon l'une des revendications 6-10.
